# EUROPEAN PATENT SPECIFICATION

(11) **EP 1 989 857 B1**
(45) Date of publication and mention of the grant of the patent: **02.12.2015**
(21) Application number: 07716875.5
(22) Date of filing: 20.01.2007
(51) Int. Cl.: H04L 29/06, H04L 29/10, G06F 13/00

(54) **MULTI-PROTOCOL REMOVABLE STORAGE DEVICE**
ENTFERNBARE SPEICHERVORRICHTUNG MIT MEHREREN PROTOKOLLEN
DISPOSITIF DE STOCKAGE AMOVIBLE À PROTOCOLES MULTIPLES

(30) Priority: 27.02.2006 US 364772
(43) Date of publication of application: 12.11.2008
(73) Proprietor: Microsoft Technology Licensing, LLC, Redmond, WA 98052 (US)
(72) Inventor: PROCTOR, David W., Redmond, WA 98052-6399 (US)
(74) Representative: Goddar, Heinz J.
(86) International application number: PCT/US2007/001613
(87) International publication number: WO 2007/100424

(56) References cited:
- EP-A2- 0 695 069
- WO-A1-01/29679
- WO-A1-01/29679
- WO-A2-02/076171
- US-A1- 2005 041 686
- US-A1- 2005 235 088
- US-A1- 2006 026 269

## Description

### BACKGROUND

The Universal Serial Bus (USB) Mass Storage Class (MSC) is a set of computing communications protocols defined by the USB Implementors Forum. The standard provides an interface to a variety of storage devices. Typical storage devices which connect to a host computer and which include this standard include external magnetic hard drives, external optical drives, including CD and DVD reader and writer drives, portable flash memory devices, including USB flash memory devices, adapters bridging between standard flash memory cards and a USB connection, digital cameras, digital audio players, such as MP3 Players, and high end digital media payers for music, video, and pictures.

The USB mass storage class as such does not specify which file system shall be used on the device using it; instead, it mainly provides a way of reading out sectors as on any hard disk device. Operating systems are free to format this storage area with any file system that is available to them, such as the File Allocation Table (FAT) file system. One downside of using the MSC is that it prevents the USB attachable device from easily presenting its actual functional behavior across the USB interface.

The Media Transfer Protocol (MTP) is a new protocol and accompanying set of drivers developed by Microsoft of Redmond, Washington, to connect portable devices to a Windows® XP personal computer (PC) and synchronize digital media content between those devices and the PC. MTP is geared toward portable devices with hard drives. Among the benefits of MTP are the following. All MTP-compatible devices use drivers that are shipped with Windows Media Player™ version 10 (MP10) and up, and users will be able to perform all transfer and synchronization functions from within the player control software. All MTP-compatible devices support a feature called AutoSync, which lets users configure MP10 to automatically transfer all newly acquired or ripped content to a device whenever it is connected to a supporting PC. MTP compatible devices have a file property synchronization allowing changes made to file properties (such as a user rating) on a device to be propagated back to the PC when the device is disconnected and then reconnected.

Thus, Media Transfer Protocol (MTP) devices provide additional functionality beyond USB Mass Storage Class (MSC) devices. However, the MTP protocol is not supported on as many host devices as is the MSC protocol. Host devices running MP10 support MTP whereas devices without MP10 or other operating systems such as Linux, MacOS, or Windows 95, Windows ME, or Windows CE do not support MTP. All of these operating systems and more support MSC. The operability of a MTP device on an older MSC supported PC is questionable unless some sort of protocol flexibility exists. Similar problems exist with other protocols. The problem is not limited to MTP and MSC.

One problem specific to MTP and MSC is the fact that MTP devices maintain a database index to all objects/files in storage that allows fast browse, sort, and access on many properties such as (but not limited to) album, artist, genre. MSC does not maintain a database index to all objects. As a result, when a removable storage device is accessed using MSC, the database index used by MTP will become out of synch with the objects.

Additionally, there is currently no standard method to detect if MSC has been used in a way that causes the MTP database to get out of synch. As a result, the host or device will have to assume the database is out of synch and repair or re-create the MTP database on every connection or reconnection. This operation adds a significant delay. A desirable feature would be the ability to select either protocol depending on the protocol supported by the host PC and to accommodate an upgraded change in that protocol.

US 2006/02629 A1 refers to an automatic protocol determination for portable devices supporting multiple protocols. A portable device detects which one of the multiple protocols is being used by the host device for subsequent communication with the portable device. This detection is based on the content of a command received from a host device. The detected protocol is then used by the portable device for subsequent communication with the host device. The host device may also send, to the portable device, a notification of which of the multiple protocols is being used by the host device.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In one aspect of the invention, a removable storage device can maintain a list of prioritized protocols for use with host computers that may support one or more of the protocols. In one embodiment, one protocol may be the MTP protocol and the other may be the MSC protocol. The MTP protocol may be deemed a priority protocol. The storage device attempts the protocols in priority order. If the protocol is successfully detected and supported by the host then operation continues as if the device functions with that protocol only. If the protocol is not detected or supported by the host, then the device emulates a disconnect event and re-connects with the next protocol in the list.

If the device connects with the MSC protocol, then the device enables write detectors for every storage region. For every write by the host to a storage region, the device sets an index flag to true. If the device connects as MTP, then the device checks each storage region's index flag. If a region's index flag is true, then the device repairs the database index for that region and clears the index flag to false. The updated index allows use of the MTP protocol's ability to classify and search digital media stored on the device even if the digital media was stored on the device using the MSC protocol which does not support indexing.

### BRIEF DESCRIPTION OF THE DRAWINGS

In the drawings:
Figure 1 is a diagram showing an example media storage device having aspects of the invention;
Figures 2 is an example flow diagram demonstrating aspects of the invention; and
Figure 3 is a block diagram showing an example host computing environment.

### DETAILED DESCRIPTION

### Exemplary Embodiments

One issue with insertable storage media is the interface and protocol used. In situations where two operational protocols can be used, the protocol to be used may be unknown to the user. For example, a user of a universal serial bus (USB) compatible storage device may not know which protocol is supported by either the device or the host computer, such as a personal computer. One solution is to equip the USB compatible device with the capability to switch between alternative protocols so that the user need not connect and disconnect the USB compatible device nor throw a manual switch to select one protocol over another. It is noted that any set of protocols may be used in conjunction with the invention and the specific embodiments presented below are not limiting.

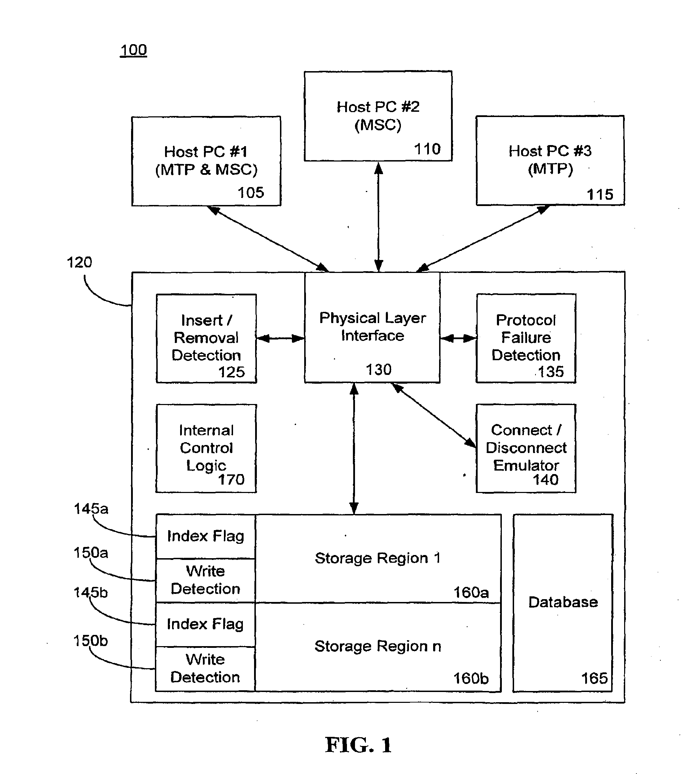

Figure 1 depicts an architecture for a USB compatible storage device that is capable of exercising multiple protocols without intervention by either the host PC or the user. Figure 1 depicts a system where a media storage device 120, compatible with at least two protocols, may be connected to either a first, second, or third host. If connected to a first host, 105, the protocol supported may be either the newer MTP protocol or the common MSC protocol. If connected to the second host, 110, the protocol supported is the MSC protocol. If connected to the third host, 115, the protocol supported is the MTP protocol.

The media storage device 120 includes a physical interface, 130, that includes the electrical and hardware aspects of a typical interface. This interface could be any of a USB interface, a firewire interface, a WiFi interface, an Ethernet, an optical (Sonet) interface, or other commonly available PC interface. The device 120 also functionally contains an insert and removal detection module 125 which is able to detect the presence of a working interface to a PC or other computing device. The insert and removals detection block determines whether the storage device 120 is connected or disconnected with a PC or other external host.

The protocol failure detection function 135 of the device 120 may store aspects of the protocols available within the device to be able to detect errors while operating or attempting to operate with one of the supported protocols. The connect and disconnect emulator 140 allows the device to emulate a disconnection and a re-connection if the device 120 has cause to change from one protocol to another. The combination of the protocol failure detection function 135 with the connect/disconnect emulator 140 enables the device 120 to operate with more than one protocol. If a first protocol is attempted and fails, the protocol failure function 135 detects that failure and, if appropriate, can be used as a trigger to activate the connect/disconnect emulator 140. Upon a protocol failure, the emulator 140, under control from the internal logic 170, can emulate a disconnection of the device 120 from a host. Then the emulator 140 can provide a logical connection of the device to the host computer thus allowing a second protocol to be attempted. The emulator 140 can provide disconnection and connection services to the device 120 as often as the logic control 170 permits.

In one aspect of the invention, the internal logic control may be realized as a logic state machine or as a programmable controller. The programmable controller may be programmed using a program downloaded from a computer readable media, such as a CD, floppy, via an interface to the media storage device 120. The programmable media may contain instruction for conducting operations on the device 120. Power for the device 120 may be derived from the bus interface, such as if the device were USB compatible. Alternately, or in conjunction, the device 120 may include a battery to provide needed bias for maintenance and/or operational power.

The device 120 supports the MTP protocol. Accordingly, a database 165 is provided so that the device 120 may store and catalogue aspects of files stored in the device. For example, if the device is a digital music device, every specific file may have aspects that include file name, size, artist, album, genre, title, and other tags or attributes. These attributes and information may be stored in the database 165. The MTP protocol also allows a user to sort or search the contents of the device for songs. One way of implementing a search is with indexes on the database which can point to locations in storage where a song is accessible. Accordingly, indexes on the database information are supported in MTP. The index columns and rows may be stored in the database 165. In one embodiment, the MTP database may be supported by a small disk drive or by semiconductor memory.

Storage regions 1 through N, 160a and 160b are depicted in Figure 1. The device database 165 may be used as storage for media such as digital music. Accordingly, in that specific example, indication of the storage areas, such as 160a and 160b may be used to associate music files or groups of music files stored on the database 165. Each storage area has an associated index flag and write detection element. The index flags 145a and 145b are associated with storage regions 160a and 160b respectively, write detection modules 150a and 150b are associated with storage region indicators 160a and 160b respectively.

In one aspect of the invention, the device 120 may be used with both a MSC as well as an MTP compatible host PC. If an MTP compatible host is connected to the device, the user may use indexes to retrieve songs according to a search criterion. If a new song is added, the index may be updated. However, if digital music content were added using an MSC protocol, the file would be added, but no index will be updated because the MSC protocol does not support indexing of files. In one aspect of the invention, if the device is connected to an MSC host which does not support the use of indexed searching, the song may be placed into a storage area in memory, such as storage region 160a. If this occurs, then write detection module 150a detects that a write to storage region 160a has occurred in the MSC operational mode and the index flag 145a is set.

Later, if an MTP protocol is used during a subsequent session, then device 120 can detect the index flag and indicate that digital content has been added but not indexed. The device 120 then allows the newly added digital content to be indexed so that the MTP protocol can allow a search of the new digital music content using an index.

In another aspect of the invention, when a new digital music is loaded onto the device, the index for that newly added digital content is updated. Multiple indexes may be updated as a result of the addition. One approach to updating the index is to update the entire storage area every time a MTP connection is made. However, this may take a large amount of time because the device may be holding upwards of 10,000 individually indexable digital content items. Using the index flag, partitioned per storage section, only the index for the storage section indicated by a activated index flag need be updated. Thus a rebuild of an entire index becomes unnecessary and updates can be accomplished in less time. Thus, the device 120 becomes available to the user more quickly. This aspect of the invention avoids the rebuild of the database indexes of the device memory. The memory used on the device may be disk or semiconductor memory, such as non-volatile or volatile memory.

In another aspect of the invention, if the device is operating under an MTP protocol and a partial file is perceived, then the database can be rolled back as in any other database to remove the partial file. A partial file may be the result of the device being removed by the user during a write operation or it may be an otherwise corrupted file. Thus, the present invention allows the recovery and rollback of a database whose files are incomplete as a result of loss of power n the device.

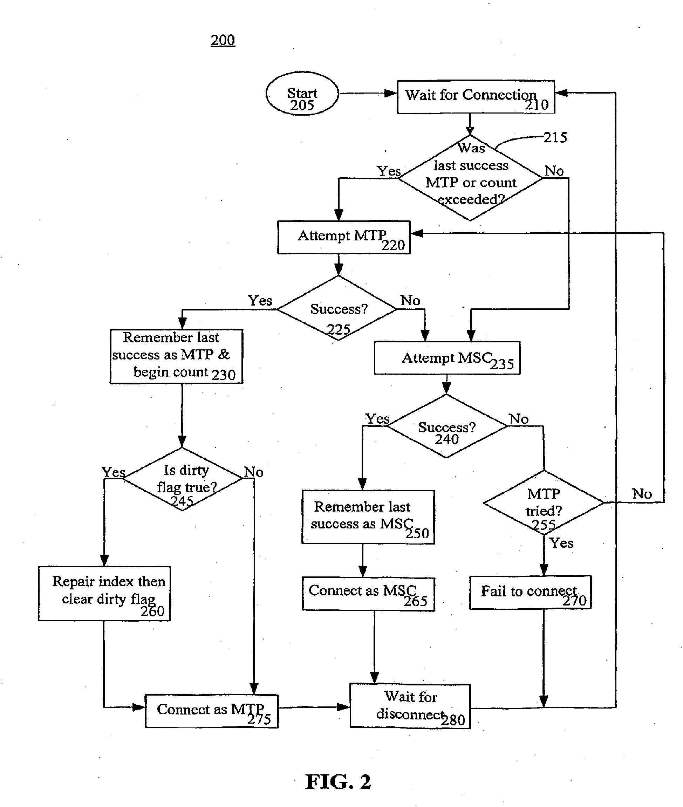

Figure 2 is one possible embodiment method 200 employing aspects of the current invention. The method 200 assumes that a media storage device, similar to device 120 of Figure 1 may be physically connected, by a user, to a host that supports either an MTP protocol, an MSC protocol, or both MTP and MSC protocols. The start of the process 200, the device awaits to be physically connected to a host (step 210). After a physical connection, a success flag is checked to see if the device was last successfully connected to an MTP compatible host or a configurable period of time (count) has passed (step 215). In one embodiment, the device may initially be set such that the success flag at step 215 is set to indicate a successful MTP initialization on the last attempt to connect even though the device was never previously connected. This preference may be set so that the device initially chooses to try to connect using the most enhanced protocol; MTP.

Assuming that the success flag is set to indicate a successful last MTP attempt, the process moves again to connect to an MTP compatible host (step 220). Alternately, if the count was exceeded, then an attempt to make an MTP protocol initiation is made (step 220). Exceeding a count can be a counter event, such as exceeding a configurable clock count or a successful connection count. A clock count could be the amount of time between device attachments, such as a 24 hour period, that acts as a timeout period after which the media device is directed to re-attempt an MTP protocol on the next attachment event. Alternately, exceeding a count could be a specific (configurable) number of successful connections, either MTP or MSC, made by the device. After a number of connections are made, the device can be directed to attempt the high priority MTP protocol. Assuming an MTP attempt is made (step 220), if the connection is successful (step 225), the success flag is set to remember that the last successful attempt was with an MTP compatible host (step 230). At step 230, a count, such as a clock count or a successful connection count as described above may be initiated. Next, the index flag is checked to see if it was set (step 245). If the index flag was set (true), then this indicates that a previous MSC session occurred and that there is media storage data which has not been properly indexed. If the index flag is detected as true in step 245, then the index is repaired and the index flag is cleared (step 260). Final connection as an MTP device can then be made (step 275). The media storage device may then wait for disconnection (step 280). If the device is disconnected, the process returns to wait for the next connection (step 210).

Returning to the process 200 at step 225, if the attempt to initiate the MTP protocol is not successful, then an attempt at the MSC protocol is made (step 235). In one practical aspect of the invention, the attempt to at an alternative protocol may invoke an emulation of a disconnection followed by a connection. If the initiation attempt to connect with an MTP host is successful (step 240), then the media storage device remembers the last successful protocol initialization as an MSC protocol connection (step 250). Finally, the full protocol is invoked and the media storage device is connected using the MSC protocol to a host device (step 265). The media storage device then supports the operations of the MSC protocol as it awaits a disconnect indication (step 280) followed by waiting for a reconnection (step 210).

If the media storage device is subsequently attached to an MSC device, the process 200 allows the unit to be quickly connected. The device attachment would be made (step 210), and the last success would indicate an MSC connection (step 215) where the storage device would initiate connection with the host under the MSC protocol. The initialization connection with the MSC protocol host PC would be successful and the method 200 enters the steps 250 and 265 as before.

If the media storage device is subsequently connected to a host supporting MTP only, the device would enter a connection state after waiting (step 210) and would check the success flag. Since the device previously had an MSC success as the last connection protocol, the process would traverse from step 215 to step 235 and an MSC protocol initiation would occur. However, because the device is connected to an MTP only host, the MSC attempt would fail (step 240). The process then inquires if, during the present session, if there had been an MTP protocol attempt (step 255). In this instance, there was no previous MTP attempt. So, the process traverses from step 255 to step 220 where an attempt at the MTP protocol is made. Upon successful connection (step 225), the success flag is set to indicate an MTP success, so any subsequent connection to a host will be first tried with an MTP compatible protocol (step 230). Once again, after a successful MTP initialization, the index flag is tested (step 245). If the index flag is set, then the index is repaired before full connection with the MTP protocol (step 275).

Going back to step 255, where an MSC connection attempt failed, if the MTP protocol was previously tried and failed, the process 200 concludes that the media storage device failed to connect (step 270) using either an MSC protocol or with MTP and thus traverses to await another reconnection (step 210).

The method 200 illustrates the flexibility of the present invention. Once a device has connected with one protocol, it remembers that success, and, when reconnected to a host, attempts to use that same successful protocol. If however, the storage media device is connected to a host supporting a different protocol, it first tries the protocol that was last successful, and if that fails, the store device tries the alternate protocol. If both protocols fail, then the device awaits a subsequent reconnection. Accordingly, the media storage device may be connected to a host which supports any of the MTP protocol, the MSC protocol, and a host that supports either protocol. The device may be moved from one host to another, and the device will successfully connect if the host supports any of the protocols that are supported by the device. If the device is used on an MSC device, and subsequently is connected to an MTP device, an automatic index repair is conducted so that full MTP protocol functionality may be used even though digital content was downloaded using an MSC protocol.

In one embodiment of the invention, the host computer may support either an MSC or an MTP protocol. Accordingly, if the device were previously used in conjunction with an MSC only host, the storage device would remember that successful connection and always attempt to connect using an MSC protocol. So, if the media storage device were connected to a host supporting both MSC and MTP protocol, the MSC protocol would be favored due to the MSC setting of the success flag. In one embodiment, the MTP protocol would be attempted after a predetermined number of counts if the last success flag were set to try MSC. The count could be a timed count, fed by a clock or it may be a counter indicating the number of times the media storage device was connected to a host computer. Clocks, accumulators, flags, or registers may be included in the control logic 170. For example, if the success flag were set to favor an MSC protocol attempt, then, after every predetermined number of reconnects (e.g. three or four connections to a host), the storage device would switch to favor an initial MTP protocol attempt. This would allow the device to become upwardly compatible with the advanced MTP protocol and accommodate the possibility that the user of the storage device might connect the device to an MTP or MSC compatible host.
In one embodiment, an exceeded predetermined count would set the success flag to the preferred MTP protocol. In another embodiment, an exceeded predetermined count would simply override the success flag and use the preferred MTP protocol as the initial attempt protocol.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

### Exemplary Computing Device

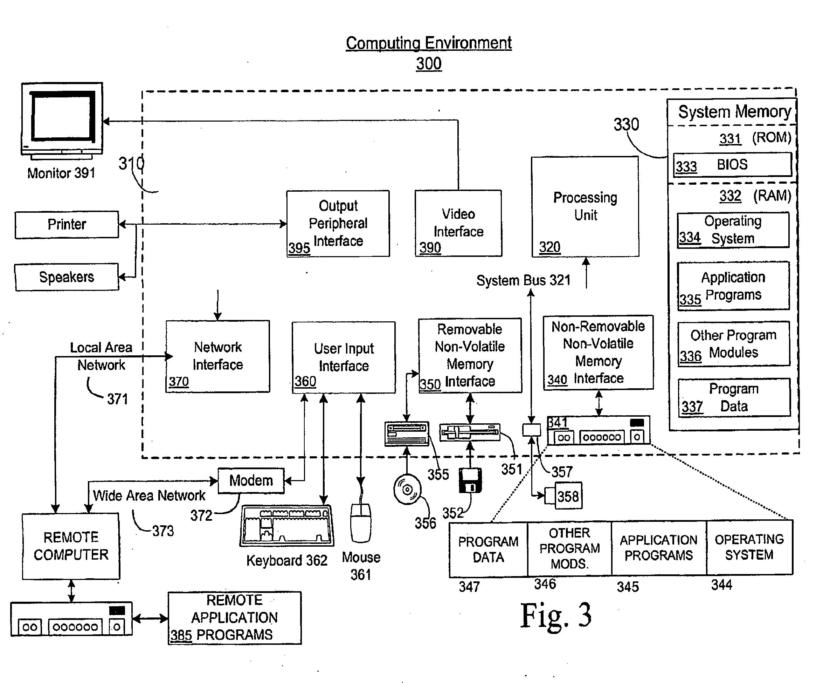

Figure 3 and the following discussion are intended to provide a brief general description of host computer suitable for interfacing with the media storage device. While a general purpose computer is described below, this is but one single processor example, and embodiments of the host computer with multiple processors may be implemented with other computing devices, such as a client having network/bus interoperability and interaction.

With reference to Figure 3, an exemplary system for implementing an example host computer includes a general purpose computing device in the form of a computer system 310. Components of computer system 310 may include, but are not limited to, a processing unit 320, a system memory 330, and a system bus 321 that couples various system components including the system memory to the processing unit 320. The system bus 321 may be any of several types of bus structures including a memory bus or memory controller, a peripheral bus, and a local bus using any of a variety of bus architectures.

Computer system 310 typically includes a variety of computer readable media. Computer readable media can be any available media that can be accessed by computer system 310 and includes both volatile and nonvolatile media, removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, Random Access Memory (RAM), Read Only Memory (ROM), Electrically Erasable Programmable Read Only Memory (EEPROM), flash memory or other memory technology, Compact Disk Read Only Memory (CDROM), compact disc-rewritable (CDRW), digital versatile disks (DVD) or other optical disk storage, magnetic cassettes, magnetic tape, magnetic disk storage or other magnetic storage devices, or any other medium which can be used to store the desired information and which can accessed by computer system 310.

The system memory 330 includes computer storage media in the form of volatile and/or nonvolatile memory such as read only memory (ROM) 331 and random access memory (RAM) 332. A basic input/output system 333 (BIOS), containing the basic routines that help to transfer information between elements within computer system 310, such as during start-up, is typically stored in ROM 331. RAM 332 typically contains data and/or program modules that are immediately accessible to and/or presently being operated on by processing unit 320. By way of example, and not limitation, Figure 3 illustrates operating system 333, application programs 335, other program modules 336, and program data 337.

The computer system 310 may also include other removable/non-removable, volatile/nonvolatile computer storage media. By way of example only, Figure 3 illustrates a hard disk drive 331 that reads from or writes to non-removable, nonvolatile magnetic media, a magnetic disk drive 351 that reads from or writes to a removable, nonvolatile magnetic disk 352, and an optical disk drive 355 that reads from or writes to a removable, nonvolatile optical disk 356, such as a CD ROM, CDRW, DVD, or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 341 is typically connected to the system bus 321 through a non-removable memory interface such as interface 340, and magnetic disk drive 351 and optical disk drive 355 are typically connected to the system bus 321 by a removable memory interface, such as interface 350. Other connections to system bus 321 include a serial interface connection 357 which provides power and data connection services to a serial interface device 358. Examples of serial connections 357 include a firewire, USB, and optical interfaces. Examples of serial interface devices include flash memory devices, media devices, and other peripheral devices such as scanners and combination devices.

The drives and their associated computer storage media discussed above and illustrated in Figure 3 provide storage of computer readable instructions, data structures, program modules and other data for the computer system 310. In Figure 3, for example, hard disk drive 341 is illustrated as storing operating system 344, application programs 345, other program modules 346, and program data 347. Note that these components can either be the same as or different from operating system 344, application programs 345, other program modules 346, and program data 347. Operating system 344, application programs 345, other program modules 346, and program data 347 are given different numbers here to illustrate that, at a minimum, they are different copies. A user may enter commands and information into the computer system 310 through input devices such as a keyboard 362 and pointing device 361, commonly referred to as a mouse, trackball or touch pad. Other input devices (not shown) may include a microphone, joystick, game pad, satellite dish, scanner, or the like. These and other input devices are often connected to the processing unit 320 through a user input interface 360 that is coupled to the system bus 321, but may be connected by other interface and bus structures, such as a parallel port, game port or a universal serial bus (USB). A monitor 391 or other type of display device is also connected to the system bus 321 via an interface, such as a video interface 390, which may in turn communicate with video memory (not shown). In addition to monitor 391, computer systems may also include other peripheral output devices such as speakers 397 and printer 396, which may be connected through an output peripheral interface 395.

The computer system 310 may operate in a networked or distributed environment using logical connections to one or more remote computers, such as a remote computer 380. The remote computer 380 may be a personal computer, a server, a router, a network PC, a peer device or other common network node, and typically includes many or all of the elements described above relative to the computer system 310, although only a memory storage device 381 has been illustrated in Figure 3. The logical connections depicted in Figure 3 include a local area network (LAN) 371 and a wide area network (WAN) 373, but may also include other networks/buses. Such networking environments are commonplace in homes, offices, enterprise-wide computer networks, intranets and the Internet.

When used in a LAN networking environment, the computer system 310 is connected to the LAN 371 through a network interface or adapter 370. When used in a WAN networking environment, the computer system 310 typically includes a modem 372 or other means for establishing communications over the WAN 373, such as the Internet. The modem 372, which may be internal or external, may be connected to the system bus 321 via the user input interface 360, or other appropriate mechanism. In a networked environment, program modules depicted relative to the computer system 310, or portions thereof, may be stored in the remote memory storage device. By way of example, and not limitation, Figure 3 illustrates remote application programs 385 as residing on memory device 381. It will be appreciated that the network connections shown are exemplary and other means of establishing a communications link between the computers may be used.

The various techniques described herein may be implemented in connection with hardware or software or, where appropriate, with a combination of both. Thus, the methods and apparatus of the invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention.

While aspects of the present invention has been described in connection with the preferred embodiments of the various figures, it is to be understood that other similar embodiments may be used or modifications and additions may be made to the described embodiment for performing the same function of the present invention without deviating therefrom. Furthermore, it should be emphasized that a variety of computer platforms, including handheld device operating systems and other application specific operating systems are contemplated, especially as the number of wireless networked devices continues to proliferate. Therefore, the claimed invention should not be limited to any single embodiment, but rather should be construed in breadth and scope in accordance with the appended claims.

## Claims

1. A method to select a data transfer protocol by an attached device (120), the method comprising:
detecting a physical attachment of the device (120) to a host computer (105, 110, 115), the device capable of using at least two data transfer protocols;
attempting the use of a first data transfer protocol by the device (120), the first data transfer protocol comprising an initial attempt protocol;
upon failure of the first data transfer protocol to initiate communications with the host computer (105, 110, 115), logically disconnecting the device (120) followed by logically reconnecting the device (120);
attempting use of a second data transfer protocol by the device (120), wherein the second data transfer protocol is a successful protocol in initiating communications with the host computer (105, 110, 115);
storing an indicator of the successful protocol, wherein the indicator is used on a subsequent physical attachment of the device (120) to the host computer (105, 110, 115) or another host computer (105, 110, 115) to select an initial attempt protocol; and
sensing a physical disconnection of the device (120) from the host computer (105, 110,115);
detecting a subsequent physical attachment of the device (120) to the host computer (105, 110, 115) or to another host computer (105, 110, 115); the method being **characterised by**:
attempting the use of the successful protocol identified by the indicator if a predetermined count is not exceeded, wherein the count is an indication of the number of physical attachments encountered by the device (120) to any host computer (105, 110, 115); and
attempting the use of an alternate protocol other than the successful protocol identified by the indicator to establish communication with the host computer (105, 110, 115) or another host computer (105, 110, 115) if the predetermined count is exceeded.

2. The method of claim 1, wherein storing an indicator of the successful protocol comprises setting a success flag (145a, 145b), wherein the success flag (145a, 145b) indicates the last successful protocol used to initiate communications with the host computer (105, 110, 115),
wherein the success flag (145a, 145b) indicates either a USB mass storage class, MSC, protocol or a USB media transfer protocol, MTP.

3. The method of claim 2, further comprising:
testing an index flag (145a, 145b) to determine if a write to memory was performed when the device (120) was operated using the MSC protocol.

4. The method of claim 3, further comprising:
updating an index of the region of memory associated with the index flag (145a, 145b), wherein the index is useful if the device (120) is successfully connected to a host computer (105, 110, 115) using the MTP protocol.

5. The method of claim 1, wherein the alternate protocol is a preferred protocol, wherein the preferred protocol is the MTP protocol and wherein the method further comprises:
updating the indicator of the successful protocol to indicate the preferred protocol if the preferred protocol is successfully used to initiate contact with the host computer (105, 110, 115).

6. A media storage device (120) for automatically selecting one of at least two protocols, the storage device (120) comprising:
a physical interface (130) for connection to any compatible host computer (105, 110, 115);
an insert and removal detector (125) for detection of attachment and removal of the device with any compatible host computer (105, 110, 115);
a protocol failure detector (135) to determine if a protocol being used to initiate communications with a connected host computer (105, 110, 115) has failed;
a connect and disconnect emulator (140) to logically simulate making and breaking communication with the connected host computer (105, 110, 115);
a success indicator representing which protocol was last successful in establishing communications with any compatible host computer (105, 110, 115);
internal control logic (170) which coordinates detecting an attachment of the device to a target host computer (105, 110, 115), attempting an initial protocol for communication with the target host computer (105, 110, 115), logically disconnecting and reconnecting to the target host computer (105, 110, 115) if the protocol failure detector (135) indicates that the initial protocol has failed to initiate communications with the target host computer (105, 110, 115), attempting a second protocol for communications with the target host computer (105, 110, 115), and setting the success indicator to record which protocol was successful for communications with the target host computer (105, 110, 115), wherein the success indicator is used on a subsequent physical attachment of the device to select a data protocol; and **characterized by** a connection counter which counts the number of times a physical connection is made to any host computer (105, 110, 115), the counter used to force the device to attempt use of the media transfer protocol if the count exceeds a predetermined value or
a clock counter which counts an amount of time between physical connections made to any host computer (105, 110, 115), the counter used to force the device to attempt use of the media transfer protocol if the count exceeds a predetermined value.

7. The media storage device of claim 6, further comprising:
a database (165) to store digital media on the device; and
a multiplicity of index flags (145a, 145b), each associated with a respective multiplicity of storage regions (160a, 160b) of the database, each index flag (145a, 145b), if set, indicating that an index of digital media stored in the associated storage region (160a, 160b) has not been updated,
wherein the at least two protocols comprise a USB mass storage device (MSD) protocol and a USB media transfer protocol, MTP.

8. The media storage device of claim 7, wherein the index of digital media stored is updated when the device is connected using the media transfer protocol (MTP) and a previous attachment used the mass storage class (MSC) protocol where a write of digital content to the database (165) was made.

9. The media storage device of claim 6, further comprising:
a write detector (150a, 150b) associated with a storage region (160a, 160b) of the database, wherein the write detector (150a, 150b) detects a write to the storage region (160a, 160b) of the database and sets an associated index flag (145a, 145b).

10. The media storage device of claim 6, wherein the physical interface (130) comprises one of a USB interface, firewire interface, a WiFi interface, an Ethernet interface, and a Sonet interface.

11. A computer-readable media having instructions for a controller (170) for a media storage device (120) containing a database (165), the media storage device performing a method of selecting a protocol, the method comprising:
detecting a physical attachment of the device (120) to a host computer (105, 110, 115), the device capable of using at least two data transfer protocols, the protocols comprising mass storage class, MSC, protocol and media transport protocol, MTP;
attempting the use of a first data transfer protocol by the device (120), the first data transfer protocol comprising an initial attempt protocol;
upon failure of the first data transfer protocol to initiate communications with the host computer (105, 110, 115), logically disconnecting the device followed by logically reconnecting the device;
attempting use of a second data transfer protocol by the device (120), wherein the second data transfer protocol is a successful protocol in initiating communications with the host computer (105, 110, 115);
setting a success flag (145a, 145b) to be an indicator of the successful protocol, wherein the success flag (145a, 145b) is used on a subsequent physical attachment of the device (120) to any host computer (105, 110, 115) to select an initial attempt protocol; and
sensing a physical disconnection of the device (120) from the host computer (105, 110, 115);
detecting a subsequent physical attachment of the device (120) to any host computer (105,110,115); and **characterized by**
attempting the use of the successful protocol identified by the indicator if a predetermined count is not exceeded, wherein the count is an indication of the number of physical attachments encountered by the device (120) to any host computer (105, 110, 115); and
attempting the use of an alternate protocol other than the successful protocol identified by the indicator to establish communication with the host computer (105, 110, 115) if the predetermined count is exceeded.

12. The computer-readable media of claim 11, further method further comprising:
testing an index flag (145a, 145b) to determine if a write to memory was performed when the device was operated using the MSC protocol and, if true, updating an index of digital media on the database while operating using the MTP protocol.

13. The computer-readable media of claim 11, further method further comprising:
sensing a physical disconnection of the device (120) from the host computer (105, 110, 115);
detecting a subsequent physical attachment of the device (120) to a host computer (105, 110, 115);
attempting the use of the successful protocol identified by the success flag (145a, 145b) if a predetermined count is not exceeded; and
attempting the use of the MTP protocol to establish communication with a host computer (105, 110, 115) if a predetermined count is exceeded.

## Patentansprüche

1. Verfahren zum Wählen eines Datentransferprotokolls durch eine angefügte Vorrichtung (120), wobei das Verfahren aufweist:
Erfassen einer physikalischen Anfügung der Vorrichtung (120) an einem Hostcomputer (105, 110, 115), wobei die Vorrichtung dazu geeignet ist zumindest zwei Datentransferprotokolle zu verwenden;
Versuchen des Gebrauchs eines ersten Datentransferprotokolls durch die Vorrichtung (120), wobei das erste Datentransferprotokoll ein Anfangsversuchsprotokoll aufweist;
bei Versagen des ersten Datentransferprotokolls um Kommunikationen mit dem Hostcomputer (105, 110, 115) zu initiieren, logisches Trennen der Vorrichtung (120) gefolgt von einem logischen Neuverbinden der Vorrichtung (120);
Versuchen eines Gebrauchs eines zweiten Datentransferprotokolls durch die Vorrichtung (120), wobei das zweite Datentransferprotokoll ein erfolgreiches Protokoll beim Initiieren von Kommunikationen mit dem Hostcomputer (105, 110, 115) ist;
Speichern eines Indikators des erfolgreichen Protokolls, wobei der Indikator bei einer nachfolgenden physikalischen Anfügung der Vorrichtung (120) an den Hostcomputer (105, 110, 115) oder einen anderen Hostcomputer (105, 110, 115) verwendet wird, um ein Anfangsversuchsprotokoll zu wählen; und
Fühlen einer physikalischen Trennung der Vorrichtung (120) vom Hostcomputer (105, 110, 115);
Erfassen einer nachfolgenden physikalischen Anfügung der Vorrichtung (120) an den Hostcomputer (105, 110, 115) oder einen anderen Hostcomputer (105, 110, 115), wobei das Verfahren **gekennzeichnet ist durch**:
Versuchen des Gebrauchs des erfolgreichen Protokolls, das **durch** den Indikator identifiziert ist, falls ein vorbestimmter Zählwert nicht überschritten wird, wobei der Zählwert ein Hinweis auf die Anzahl physikalischer Anfügungen an einen beliebigen Hostcomputer (105, 110, 115) ist, welchen die Vorrichtung (120) ausgesetzt war; und
Versuchen des Gebrauchs eines alternativen Protokolls, das ein anderes ist als das erfolgreiche Protokoll, das **durch** den Indikator identifiziert wurde, um eine Kommunikation mit dem Hostcomputer (105, 110, 115) oder einem anderen Hostcomputer (105, 110, 115) einzurichten, falls der vorbestimmte Zählwert überschritten wird.

2. Verfahren nach Anspruch 1, wobei ein Speichern eines Indikators des erfolgreichen Protokolls ein Setzen eines Erfolg-Flags (145a, 145b) aufweist, wobei das Erfolg-Flag (145a, 145b) das letzte erfolgreiche Protokoll angibt, das verwendet wurde, um Kommunikationen mit dem Hostcomputer (105, 110, 115) zu initiieren,
wobei das Erfolg-Flag (145a, 145b) entweder ein USB-Massenspeicherklasse, MSC,-Protokoll oder ein USB-Medientransferprotokoll, MTP, anzeigt.

3. Verfahren nach Anspruch 2, das weiter aufweist:
Testen eines Index-Flags (145a, 145b) um zu bestimmen, ob ein Schreiben in einen Speicher durchgeführt wurde, wenn die Vorrichtung (120) unter Verwendung des MSC-Protokolls betrieben wurde.

4. Verfahren nach Anspruch 3, welches weiter aufweist:
Aktualisieren eines Index des Speicherbereichs, der mit dem Index-Flag (145a, 145b) assoziiert ist, wobei der Index nützlich ist, falls die Vorrichtung (120) erfolgreich mit einem Hostcomputer (105, 110, 115) unter Verwendung des MTP Protokolls verbunden wurde.

5. Verfahren nach Anspruch 1, wobei das alternative Protokoll ein bevorzugtes Protokoll ist, wobei das bevorzugte Protokoll das MTP-Protokoll ist und wobei das Verfahren weiter aufweist:
Aktualisieren des Indikators des erfolgreichen Protokolls, um das bevorzugte Protokoll anzuzeigen, falls das bevorzugte Protokoll erfolgreich verwendet wurde, um einen Kontakt mit dem Hostcomputer (105, 110, 115) zu initiieren.

6. Medienspeichervorrichtung (120) zum automatischen Wählen eines von zumindest zwei Protokollen, wobei die Speichervorrichtung (120) aufweist:
eine physikalische Schnittstelle (130) zur Verbindung mit einem beliebigen kompatiblen Hostcomputer (105, 110, 115);
einen Einfüge- und Entfern-Detektor (125) zum Erfassen eines Anfügens und Entfernens der Vorrichtung bei einem beliebigen kompatiblen Hostcomputer (105, 110, 115);
einen Protokollfehlerdetektor (135), um zu bestimmen, ob ein Protokoll, das verwendet wurde, um Kommunikationen mit einem angeschlossenen Hostcomputer (105, 110, 115) zu initiieren, fehlgeschlagen ist;
einen Verbinde- und Trenn-Emulator (140) zum logischen Simulieren eines Herstellens und Unterbrechens einer Kommunikation mit dem angeschlossenen Hostcomputer (105, 110, 115);
einen Erfolgsindikator, der darstellt, welches Protokoll beim Herstellen von Kommunikationen mit einem beliebigen kompatiblen Hostcomputer (105, 110, 115) zuletzt erfolgreich war;
eine interne Steuerlogik (170), die ein Erfassen einer Anfügung der Vorrichtung an einem Zielhostcomputer (105, 110, 115) koordiniert, ein internes Protokoll für eine Kommunikation mit dem Zielhostcomputer (105, 110, 115) versucht, logisch von dem Zielhostcomputer (105, 110, 115) trennt und neu verbindet, falls der Protokollfehlerdetektor (135) anzeigt, dass das initiale Protokoll fehlgeschlagen ist, um Kommunikationen mit dem Zielhostcomputer (105, 110, 115) zu initiieren, ein zweites Protokoll für Kommunikationen mit dem Zielhostcomputer (105, 110, 115) versucht, und den Erfolgsindikator einstellt, um aufzuzeichnen, welches Protokoll für Kommunikationen mit dem Zielhostcomputer (105, 110, 115) erfolgreich war, wobei der Erfolgsindikator bei einer nachfolgenden physikalischen Anfügung der Vorrichtung verwendet wird, um ein Datenprotokoll zu wählen; und **gekennzeichnet durch**:
einen Verbindungszähler, der die Häufigkeitsanzahl zählt, mit der eine physikalische Verbindung mit einem beliebigen Hostcomputer (105, 110, 115) hergestellt wurde, wobei der Zähler verwendet wird, um die Vorrichtung zu zwingen, eine Verwendung des Medientransferprotokolls zu versuchen, falls der Zählwert einen vorbestimmten Wert übersteigt oder
einen Taktzähler, der eine Zeitdauer zwischen physikalischen Verbindungen zählt, die mit einem beliebigen Hostcomputer (105, 110, 115) hergestellt wurden, wobei der Zähler verwendet wird, um die Vorrichtung zu zwingen, eine Verwendung des Medientransferprotokolls zu versuchen, wenn der Zählwert einen vorbestimmten Wert übersteigt.

7. Medienspeichervorrichtung nach Anspruch 6, welche weiter aufweist:
eine Datenbasis (165) zum Speichern digitaler Medien auf der Vorrichtung;
eine Mehrzahl von Index-Flags (145a, 145b), die jeweils mit einer entsprechenden Mehrzahl von Speicherbereichen (160a, 160b) der Datenbasis assoziiert sind, wobei jedes Index-Flag (145a, 145b), falls es gesetzt ist, anzeigt, dass ein Index digitaler, in dem assoziierten Speicherbereich (160a, 160b) gespeicherter Medien nicht aktualisiert wurde,
wobei die zumindest zwei Protokolle ein USB-Massenspeichervorrichtung (MSD)-Protokoll und ein USB-Medientransferprotokoll, MTP, aufweisen.

8. Medienspeichervorrichtung nach Anspruch 7, wobei der Index von digitalen gespeicherten Medien aktualisiert wird, wenn die Vorrichtung unter Verwendung des Medientransferprotokolls (MTP) angeschlossen ist und eine vorherige Anfügung das Massenspeicherklasse (MSC)-Protokoll verwendete, wobei ein Schreiben von digitalem Inhalt in die Datenbank (165) vorgenommen wurde.

9. Medienspeichervorrichtung nach Anspruch 6, welche weiter aufweist:
einen Schreibdetektor (150a, 150b), der mit einem Speicherbereich (160a, 160b) der Datenbasis assoziiert ist, wobei der Schreibdetektor (150a, 150b) ein Schreiben in den Speicherbereich (160a, 160b) der Datenbasis erfasst und ein assoziiertes Index-Flag (145a, 145b) setzt.

10. Medienspeichervorrichtung nach Anspruch 6, wobei die physikalische Schnittstelle (130) eine von einer USB-Schnittstelle, einer Firewire-Schnittstelle, einer WiFi-Schnittstelle, einer Ethernet-Schnittstelle und einer Sonet-Schnittstelle aufweist.

11. Computerlesbares Medium mit Instruktionen für einen Kontroller (170) für eine Medienspeichervorrichtung (120), die eine Datenbasis (165) aufweist, wobei die Medienspeichervorrichtung ein Verfahren zum Auswählen eines Protokolls ausführt, wobei das Verfahren aufweist:
Erfassen einer physikalischen Anfügung der Vorrichtung (120) an einen Hostcomputer (105, 110, 115), wobei die Vorrichtung dazu eingerichtet ist, zumindest zwei Datentransferprotokolle zu verwenden, wobei die Protokolle ein Massenspeicherklasse, MSC,-Protokoll und ein Medientransportprotokoll, MTP, aufweisen;
Versuchen der Verwendung eines ersten Datentransferprotokolls durch die Vorrichtung (120), wobei das erste Datentransferprotokoll ein Anfangsversuchsprotokoll aufweist;
bei einem Fehler des ersten Datentransferprotokolls, um Kommunikationen mit dem Hostcomputer (105, 110, 115) zu initiieren, logisches Trennen der Vorrichtung gefolgt von einem logischen Neuverbinden der Vorrichtung;
Versuchen einer Verwendung eines zweiten Datentransferprotokolls durch die Vorrichtung (120), wobei das zweite Datentransferprotokoll ein erfolgreiches Protokoll beim Initiieren von Kommunikationen mit dem Hostcomputer (105, 110, 115) ist;
Setzen eines Erfolg-Flags (145a, 145b) als einen Indikator des erfolgreichen Protokolls, wobei das Erfolg-Flag (145a, 145b) bei einer nachfolgenden physikalischen Anfügung der Vorrichtung an einen beliebigen Hostcomputer (105, 110, 115) verwendet wird, um ein Anfangsversuchsprotokoll zu wählen; und
Fühlen einer physikalischen Trennung der Vorrichtung (120) vom Hostcomputer (105, 110, 115);
Erfassen einer nachfolgenden physikalischen Anfügung der Vorrichtung (120) an einen beliebigen Hostcomputer (105, 110, 115); und **gekennzeichnet durch** Versuchen der Verwendung des erfolgreichen Protokolls, das **durch** den Indikator identifiziert wurde, falls ein vorbestimmter Zählwert nicht überschritten wurde, wobei der Zählwert ein Hinweis auf die Anzahl physikalischer Anfügungen an einen beliebigen Hostcomputer (105, 110, 115) ist, der die Vorrichtung (120) ausgesetzt war; und
Versuchen der Verwendung eines alternativen Protokolls, das ein anderes ist als das erfolgreiche Protokoll, das **durch** den Indikator identifiziert wurde, um eine Verbindung mit dem Hostcomputer (105, 110, 115) einzurichten, falls der vorbestimmte Zählwert überstiegen wurde.

12. Computerlesbares Medium nach Anspruch 11, wobei das Verfahren weiter aufweist:
Testen eines Index-Flags (145a, 145b), um zu bestimmen, ob ein Schreiben in einen Speicher durchgeführt wurde, wenn die Vorrichtung unter Verwendung des MSC-Protokolls betrieben wurde, und, falls wahr, Aktualisieren eines Index eines digitalen Mediums in der Datenbasis während eines Betriebs unter Verwendung des MTP-Protokolls.

13. Computerlesbares Medium nach Anspruch 11, wobei das Verfahren weiter aufweist:
Fühlen einer physikalischen Trennung der Vorrichtung (120) vom Hostcomputer (105, 110, 115);
Erfassen einer nachfolgenden physikalischen Anfügung der Vorrichtung (120) an den Hostcomputer (105, 110, 115);
Versuchen der Verwendung des erfolgreichen Protokolls, das durch das Erfolg-Flag identifiziert ist (145a, 145b), falls ein vorbestimmter Zählwert nicht überschritten wurde; und
Versuchen der Verwendung des MTP-Protokolls, um eine Kommunikation mit einem Hostcomputer (105, 110, 115) einzurichten, wenn ein vorbestimmter Zählwert überschritten wurde.

## Revendications

1. Procédé de sélection d'un protocole de transfert de données par un dispositif connecté (120), le procédé comprenant les étapes ci-dessous consistant à :
détecter une connexion physique du dispositif (120) à un ordinateur hôte (105, 110, 115), le dispositif étant apte à utiliser au moins deux protocoles de transfert de données ;
tenter l'utilisation d'un premier protocole de transfert de données, par le dispositif (120), le premier protocole de transfert de données comprenant un protocole de tentative initial ;
en cas d'échec du premier protocole de transfert de données lors de l'initiation de communications avec l'ordinateur hôte (105, 110, 115), déconnecter le dispositif de manière logique (120), et reconnecter le dispositif de manière logique (120) ;
tenter l'utilisation d'un second protocole de transfert de données par le dispositif (120), dans lequel le second protocole de transfert de données est un protocole ayant réussi l'initiation de communications avec l'ordinateur hôte (105, 110, 115) ;
stocker un indicateur du protocole réussi, dans lequel l'indicateur est utilisé lors d'une connexion physique subséquente du dispositif (120) à l'ordinateur hôte (105, 110, 115) ou à un autre ordinateur hôte (105, 110, 115) en vue de sélectionner un protocole de tentative initial ; et
détecter une déconnexion physique du dispositif (120) de l'ordinateur hôte (105, 110, 115) ;
détecter une connexion physique subséquente du dispositif (120) à l'ordinateur hôte (105, 110, 115) ou à un autre ordinateur hôte (105, 110, 115) ; le procédé étant **caractérisé par** les étapes ci-dessous consistant à :
tenter l'utilisation du protocole réussi identifié par l'indicateur si un comptage prédéterminé n'est pas dépassé, dans lequel le comptage correspond à une indication du nombre de connexions physiques rencontrées par le dispositif (120) à un quelconque ordinateur hôte (105, 110, 115) ; et
tenter l'utilisation d'un protocole alternatif distinct du protocole réussi identifié par l'indicateur, en vue d'établir une communication avec l'ordinateur hôte (105, 110, 115) ou un autre ordinateur hôte (105, 110, 115), si le comptage prédéterminé est dépassé.

2. Procédé selon la revendication 1, dans lequel le stockage d'un indicateur du protocole réussi comprend la définition d'un fanion de réussite (145a, 145b), dans lequel le fanion de réussite (145a, 145b) indique le dernier protocole réussi utilisé pour initier des communications avec l'ordinateur hôte (105, 110, 115) ;
dans lequel le fanion de réussite (145a, 145b) indique soit un protocole de classe de stockage de masse USB, MSC, soit un protocole de transfert multimédia USB, MTP.

3. Procédé selon la revendication 2, comprenant en outre l'étape ci-dessous consistant à :
tester un fanion d'index (145a, 145b) en vue de déterminer si une écriture en mémoire a été mise en oeuvre lorsque le dispositif (120) a été exploité en utilisant le protocole MSC.

4. Procédé selon la revendication 3, comprenant en outre l'étape ci-dessous consistant à :
mettre à jour un index de la zone de mémoire associée au fanion d'index (145a, 145b), dans lequel l'index est utile si le dispositif (120) est correctement connecté à un ordinateur hôte (105, 110, 115) en utilisant le protocole MTP.

5. Procédé selon la revendication 1, dans lequel le protocole alternatif est un protocole préféré, dans lequel le protocole préféré est le protocole MTP, et dans lequel le procédé comprend en outre l'étape ci-dessous consistant à :
mettre à jour l'indicateur du protocole réussi en vue d'indiquer le protocole préféré si le protocole préféré est utilisé avec succès pour initier un contact avec l'ordinateur hôte (105, 110, 115).

6. Dispositif de stockage multimédia (120) destiné à sélectionner automatiquement l'un parmi au moins deux protocoles, le dispositif de stockage (120) comprenant :
une interface physique (130) pour la connexion à un quelconque ordinateur hôte compatible (105, 110, 115) ;
un détecteur d'insertion et de retrait (125) pour la détection de la connexion à, et le retrait du dispositif d'un quelconque ordinateur hôte compatible (105, 110, 115) ;
un détecteur d'échec de protocole (135) pour déterminer si un protocole utilisé pour initier des communications avec un ordinateur hôte connecté (105, 110, 115) a échoué ;
un émulateur de connexion et de déconnexion (140) pour simuler de manière logique une mise en oeuvre et une rupture de communication avec l'ordinateur hôte connecté (105, 110, 115) ;
un indicateur de réussite indiquant le dernier protocole ayant réussi à établir des communications avec un ordinateur hôte compatible (105, 110, 115) ;
une logique de commande interne (170) qui coordonne la détection d'une connexion du dispositif à un ordinateur hôte cible (105, 110, 115), la tentative d'un protocole initial pour une communication avec l'ordinateur hôte cible (105, 110, 115), la déconnexion logique de et la reconnexion logique à l'ordinateur hôte cible (105, 110, 115) si le détecteur d'échec de protocole (135) indique que le protocole initial a échoué à initier des communications avec l'ordinateur hôte cible (105, 110, 115), la tentative d'un second protocole pour des communications avec l'ordinateur hôte cible (105, 110, 115), et la définition de l'indicateur de réussite pour enregistrer quel protocole a réussi dans le cadre de communications avec l'ordinateur hôte cible (105, 110, 115), dans lequel l'indicateur de réussite est utilisé sur une connexion physique subséquente du dispositif pour sélectionner un protocole de données ; et **caractérisé par**
un compteur de connexions qui compte le nombre de fois où une connexion physique à un ordinateur hôte (105, 110, 115) est réalisée, le compteur étant utilisé en vue de forcer le dispositif à tenter d'utiliser le protocole de transfert multimédia si le comptage dépasse une valeur prédéterminée ; ou
un compteur d'horloge qui compte une durée entre des connexions physiques à un ordinateur hôte (105, 110, 115) mises en oeuvre, le compteur étant utilisé en vue de forcer le dispositif à tenter d'utiliser le protocole de transfert multimédia si le nombre dépasse une valeur prédéterminée.

7. Dispositif de stockage multimédia selon la revendication 6, comprenant en outre :
une base de données (165) destinée à stocker des supports numériques sur le dispositif ; et
une pluralité de fanions d'index (145a, 145b), chacun étant associé à une pluralité respective de zones de stockage (160a, 160b) de la base de données, chaque fanion d'index (145a, 145b), s'il est défini, indiquant qu'un index de supports numériques stockés dans la zone de stockage associée (160a, 160b) n'a pas été mis à jour ;
dans lequel lesdits au moins deux protocoles comprennent un protocole de dispositif de stockage de masse USB, MSD, et un protocole de transfert multimédia USB, MTP.

8. Dispositif de stockage multimédia selon la revendication 7, dans lequel l'index des supports numériques stockés est mis à jour lorsque le dispositif est connecté en utilisant le protocole de transfert multimédia (MTP) et lorsqu'une connexion précédente a utilisé le protocole de classe de stockage de masse (MSC) où une écriture de contenu numérique dans la base de données (165) a été mise en oeuvre.

9. Dispositif de stockage multimédia selon la revendication 6, comprenant en outre :
un détecteur d'écriture (150a, 150b) associé à une zone de stockage (160a, 160b) de la base de données, dans lequel le détecteur d'écriture (150a, 150b) détecte une écriture dans la zone de stockage (160a, 160b) de la base de données et définit un fanion d'index associé (145a, 145b).

10. Dispositif de stockage multimédia selon la revendication 6, dans lequel l'interface physique (130) comprend l'une parmi une interface USB, une interface FireWire, une interface WiFi, une interface Ethernet, et une interface Sonet.

11. Support lisible par ordinateur présentant des instructions pour un contrôleur (170) d'un dispositif de stockage multimédia (120) contenant une base de données (165), le dispositif de stockage multimédia mettant en oeuvre un procédé de sélection d'un protocole, le procédé comprenant les étapes ci-dessous consistant à :
détecter une connexion physique du dispositif (120) à un ordinateur hôte (105, 110, 115), le dispositif étant apte à utiliser au moins deux protocoles de transfert de données, les protocoles comprenant un protocole de classe de stockage de masse, MSC, et un protocole de transport multimédia, MTP ;
tenter l'utilisation d'un premier protocole de transfert de données, par le dispositif (120), le premier protocole de transfert de données comprenant un protocole de tentative initial ;
en cas d'échec du premier protocole de transfert de données lors de l'initiation de communications avec l'ordinateur hôte (105, 110, 115), déconnecter le dispositif de manière logique, et reconnecter le dispositif de manière logique ;
tenter l'utilisation d'un second protocole de transfert de données par le dispositif (120), dans lequel le second protocole de transfert de données est un protocole ayant réussi l'initiation de communications avec l'ordinateur hôte (105, 110, 115) ;
définir un fanion de réussite (145a, 145b) comme étant un indicateur du protocole réussi, dans lequel le fanion de réussite (145a, 145b) est utilisé lors d'une connexion physique subséquente du dispositif (120) à un quelconque ordinateur hôte (105, 110, 115) en vue de sélectionner un protocole de tentative initial ; et
détecter une déconnexion physique du dispositif (120) de l'ordinateur hôte (105, 110, 115) ;
détecter une connexion physique subséquente du dispositif (120) à un quelconque ordinateur hôte (105, 110, 115) ; et **caractérisé par** les étapes ci-dessous consistant à :
tenter l'utilisation du protocole réussi identifié par l'indicateur si un comptage prédéterminé n'est pas dépassé, dans lequel le comptage correspond à une indication du nombre de connexions physiques rencontrées par le dispositif (120) à un quelconque ordinateur hôte (105, 110, 115) ; et
tenter l'utilisation d'un protocole alternatif distinct du protocole réussi identifié par l'indicateur, en vue d'établir une communication avec l'ordinateur hôte (105, 110, 115), si le comptage prédéterminé est dépassé.

12. Support lisible par ordinateur selon la revendication 11, le procédé comprenant en outre l'étape ci-dessous consistant à :
tester un fanion d'index (145a, 145b) en vue de déterminer si une écriture en mémoire a été mise en oeuvre lorsque le dispositif a été exploité en utilisant le protocole MSC et, le cas échéant, mettre à jour un index de supports numériques sur la base de données tout en opérant à l'aide du protocole MTP.

13. Support lisible par ordinateur selon la revendication 11, le procédé comprenant en outre les étapes ci-dessous consistant à :
détecter une déconnexion physique du dispositif (120) de l'ordinateur hôte (105, 110, 115);
détecter une connexion physique subséquente du dispositif (120) à un ordinateur hôte (105, 110, 115) ;
tenter d'utiliser le protocole réussi identifié par le fanion de réussite (145a, 145b) si un comptage prédéterminé n'est pas dépassé ; et
tenter d'utiliser le protocole MTP en vue d'établir une communication avec un ordinateur hôte (105, 110, 115) si un comptage prédéterminé est dépassé.
